# EUROPEAN PATENT SPECIFICATION

(11) **EP 1 262 109 B1**
(45) Date of publication and mention of the grant of the patent: **29.03.2006**
(21) Application number: 02425329.6
(22) Date of filing: 23.05.2002
(51) Int. Cl.: A23L 2/08, B01D 1/00, B01D 1/12, B01D 1/30, B01D 45/00

(54) **Deflecting element for apparatuses for concentrating vegetables juices for alimentary use**
Ablenkelement für Vorrichtungen zur Konzentration von Pflanzensäften zur Verwendung in Lebensmitteln
Déflecteur destiné aux appareils de concentration les jus vegetaux pour l'utilisation alimentaire

(30) Priority: 23.05.2001 IT MI20011090
(43) Date of publication of application: 04.12.2002
(73) Proprietor: FMC Technologies Italia S.p.A., I-43100 Parma PR (IT)
(72) Inventor: Guatelli, Giacomo, 43030 Basilicanova PR (IT)
(74) Representative: Adorno, Silvano

(56) References cited:
- EP-A- 1 099 766
- WO-A-91/17804
- US-A- 4 264 411
- US-A- 5 415 732
- US-B1- 6 210 455
- DATABASE WPI Section Ch, Week 198711 Derwent Publications Ltd., London, GB; Class J01, AN 1987-078731 XP002209494 -& SU 1 247 033 A (BELORUSS KIROV TECHN INS), 30 July 1986 (1986-07-30)
- MOORE J.G., HESSLER W.E.: "Evaporation of heat sensitive materials" CHEMICAL ENGINEERING PROGRESS, vol. 59, no. 2, February 1963 (1963-02), pages 87-92, XP001098282 ISSN: 0360-7275
- ULRICH SCHOBINGER ET AL.: "Frucht- und Gemüsesäfte. Technologie, Chemie, Mikrobiologie, Analytik, Bedeutung, Recht" 1987 , EUGEN ULMER VERLAG XP002209493 ISBN: 3-8001-5813-2 * page 332, paragraph 1; figure 143 *

## Description

The present invention relates to apparatuses for concentrating fruit purees and vegetables juices for alimentary use such as fruit puree and tomato juices and in particular a device suitable for causing direction changes to the vapor released from the liquid-vapor mixture coming from the exchanger in evaporation chamber downstream of said exchanger.

Apparatuses for concentrating fruit purees and vegetable juices, especially of tomatoes, are already known and largely used in food industries. Usually these purees and juices, consisting essentially of a mash product of various viscosity obtained by chopping, heat-treating and refining the fresh fruit, are subsequently subjected to concentration to obtain concentrated juices/purees having the desired concentration degree.

US 6,210,455 discloses a concentrating apparatus comprising an evaporation chamber provided with a droplet separator suitable for collecting the small droplets of liquid which have a tendency to be entrained with the steam. However, the only described example of droplet separator is formed of a close-mesh net, which is unsuitable for use in an apparatus for the concentration of a food product. As a matter of fact, during the functioning of the apparatus, the meshes come into contact and become impregnated with the food product, which may subsequently ferment, with serious consequences for the bacteriological integrity of the concentration process.

EP1099766 describes a concentrating apparatus comprising a warm exchanger positioned in the center of an evaporation chamber, wherein one or more droplet separators are also provided. However, the only specific example of such separators relates to assemblies of thin plates which also in certain conditions may cause problems of fermentation.

Concentrating plants mostly used at present provide for the heating of the product to be concentrated through a shell-and-tube exchanger and the feeding thereof to a vapor evaporation chamber in which the vapors are separated from the liquid-vapor mixture, the latter being concentrated in this way. In order to keep the plant in stationary conditions, these known plants work continuously so that the evaporated water and the concentrated juice extracted from the above described system are simultaneously compensated with an amount of fresh juice feeding.

The increase of evaporation capability that is required from the market has progressively imposed the construction of larger and larger apparatuses. Consequently, also evaporation chambers, whatever the heat exchanger disposition is, have become larger to grant an efficacious separation of the vapors from the liquid-vapor mixture. However, the regulations on road transport that are presently in force in many countries forbid the transport of separators having a. diameter larger than 4 m and therefore evaporation chamber dimensions usually cannot overtake this limit.

Object of the present invention is therefore to assure a high evaporation capability to evaporation chambers, while remaining within the above mentioned limits and without having to carry out their generally problematic construction on installation place. This object is achieved by means of the present invention with a deflecting element whose features are defmed in claim 1. The deflecting element according to the present invention is intended to cause direction changes of vapors, released from the liquid-vapor mixture that comes out from the distributor, thus forcing them to go through a tortuous path with such direction changes as to enable the almost total separation of liquid phase, in the form of drops of different size, from the vapor phase.

Other advantages and features of the deflecting element according to the present invention will be evident to those skilled in the field from following detailed description made with reference to attached drawings, wherein:
Fig. 1 schematically shows a sectional view of an evaporation chamber of a tomato juice concentrating plant, provided with the deflecting element according to the present invention;
Fig. 2 shows an enlarged view of the deflecting element; and
Fig. 3 schematically shows a view of the deflector with graphic representation of the deviations of the vapor flow.

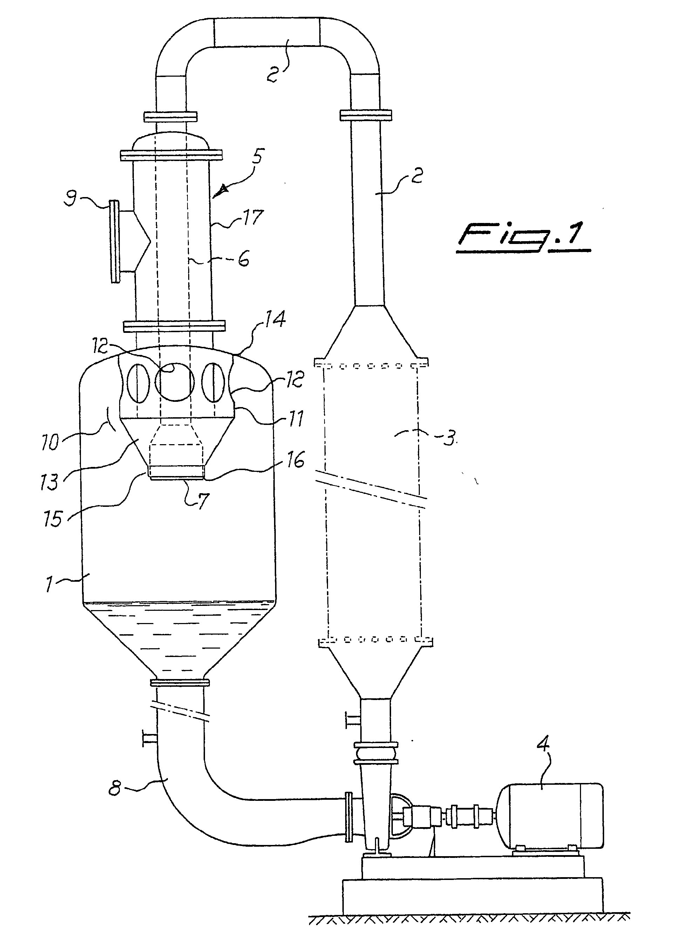

Referring to Fig. 1, there is shown a lateral elevation view of a concentrating plant for juices and/or vegetable purees wherein the evaporation chamber 1, seen in cross-section, is fed from the top, through pipe 2, with the product to be concentrated that is heated in a shell-and-tube exchanger 3. The tubes of exchanger 3 are always maintained full of product to be concentrated which flows therein from bottom to top (rising current) moved from pump 4.

The concentrating plant illustrated in Fig. 1 is object of a co-pending patent application of the same applicant and comprises a junction device 5 whose structure is described and claimed in said application.

Junction device 5 is internally provided with a coaxial pipe 6 having its upper end connected to a feeding pipe 2 for the product to be concentrated and its lower part projecting into the evaporation chamber 1. Pipe 6, represented in Fig. 1 with broken lines, ends in its lower part with a perforated plate 7 sprinkling the product to be concentrated inside the evaporation chamber 1 in a shower-like way.
The liquid phase collects on the bottom of evaporation chamber 1 and, through pipe 8, is drained from the circulation pump in order to be subsequently pumped to exchanger 3. The concentrated product is usually extracted before from circulation pump.

On the contrary, the vapor phase released from liquid-vapor mixture comes into junction device 5 after passing through the deflecting element 10 according to present invention, with different direction changes. The vapor, rising inside junction device 5, is discharged outside through a lateral opening 9 of the same device.

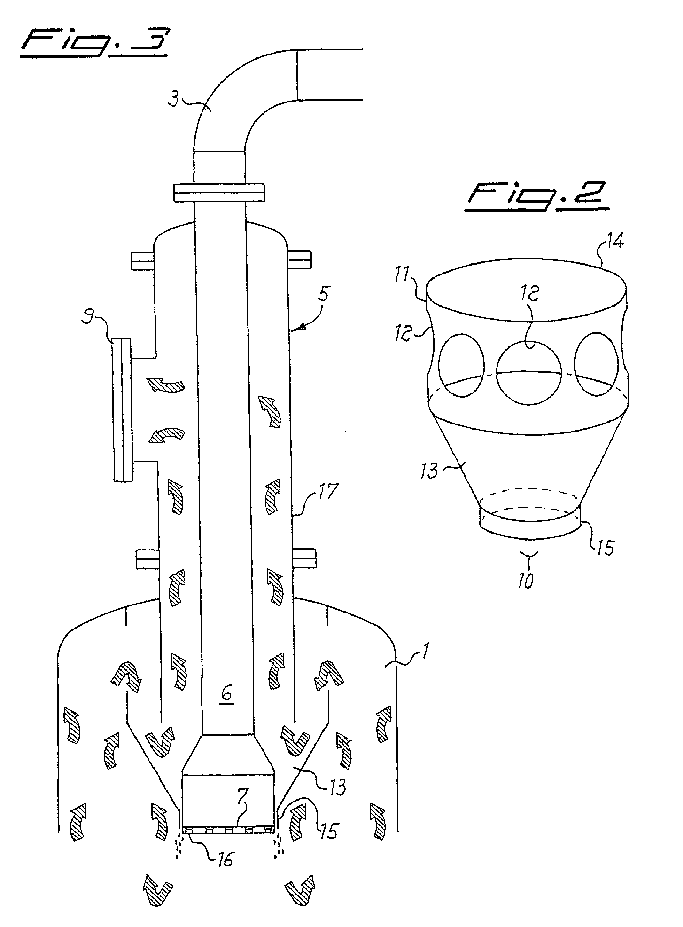

Fig. 1 also shows that the lower part of junction device 5, projecting inside evaporation chamber 1, is surrounded from deflecting element 10 according to present invention. This is essentially formed of a cylindrical cover 11, whose lateral face is provided with a plurality of holes 12 for vapor transit. Its superior circumference 14, better visible in Fig. 2, is soldered to the vault of evaporation chamber 1 and its inferior circumference is joined to a substantially frustoconical body 13 ending with a cylindrical collar 15 which surrounds in a non-tight way terminal collet 16 to which perforated plate 7, which sprinkle inside evaporation chamber 1 the product heated in exchanger 3, is fixed.

The vapor released inside evaporation chamber 1 is therefore forced to get out of it through holes 12, which are arranged on a higher level than the inferior edge of cylindrical part of junction device 5 entering the evaporation chamber, thus proceeding along a forced path with direction changes of 180° which improve separation capability of the liquid phase from the vapors for the reasons explained below.

Now, with reference to Fig. 2, showing a perspective upperly opened view of the deflecting element 10 according to present invention, it is noted that this latter prevents the vapor, released in evaporation chamber 1, from entering directly in junction device 5.

Upper circumference 14 of deflecting element 10, soldered or anyway fixed to the vault of evaporation chamber 1 in a gas-tight way, forces the vapor which has already passed through the large holes 12 made on the lateral face of the cylindrical envelope of deflecting element 10, to invert the path of 180° in order to go downwards.

On the contrary, cylindrical collar 15, arranged on the base of deflector 10, is intended to surround at short distance, even if not in a tight way, terminal collet 16 which bears to its lower end perforated plate 7, which sprinkles the product to be concentrated inside evaporation chamber 1. The small interspace which is left free between collar 15 and the concentric terminal collet 16, to which plate 7 is constrained, is suitable for letting the liquid drops pass, separated from vapor, collecting around the pipe 6 lower end, as shown in Fig. 3.

Fig. 3 shows in greater detail the forced path which the vapor released inside evaporation chamber 1 is obliged to follow before arriving to discharging exit 9. The numerous arrows in the drawing represent the tortuous path of the vapor which, once separated from the liquid phase immediately below plate 7, rises in evaporation chamber 1 by lapping the inclined surface of frustoconical part 13 of the deflecting element 10 according to the present invention.

Therefore, the vapor enters through holes 12 to go downwards, with complete inversion of the path direction, until reaching the internal wall of the frustoconical part 13 of deflecting element 10 which forces it, by causing a new path inversion, to rise inside the bell-like body 17 of junction device 5 in order to continue its path to discharge exit 9. This double and abrupt path inversion of the vapors coming out from evaporation chamber 1 allows to obtain a more efficacious separation of the liquid phase from the vapor, leaving unaltered the size of the evaporation chamber for the above specified reasons.

The many and sudden mixture direction changes help, in the case in question, the separation of the two fluids (little liquid drops of different dimension in vapor phase) just through the big difference of weight per volume unit and, thus, of momentum characterizing them.

Any material suitable for the specific characteristics of the treated products can be used to construct the deflecting element according to the present invention.

## Claims

1. A deflecting element for the vapors which are released inside an evaporation chamber (1) into which opens a vertical pipe (6) feeding from the top the product to be concentrated, which is sprinkled through a perforated plate (7) fixed to a collet (16) arranged at the end of pipe (6) surrounded by a bell-like body (17), coaxially arranged with respect to it, **characterized in that** it is formed of a cylindrical cover (11) having the lateral face provided with a plurality of holes (12), the upper circumference (14) fixed in a tight way to the voult of evaporation chamber (1) and the lower circumferences connected to a frustoconical body (13) whose minor base is, in its turn, connected to a cylindrical collar (15) surrounding in a non-tight way the terminal collet (16) of the pipe (6) whereto perforated plate (7) is fixed, which sprinkles the product to be concentrated inside the evaporation chamber (1).

## Patentansprüche

1. Ein Ablenkelement für die Dämpfe, welche in einer Verdampfungskammer (1) frei werden, in welche hinein sich ein vertikales Rohr (6) öffnet, welches von oben das zu konzentrierende Produkt zuführt, welches durch eine perforierte Platte (7) versprüht wird, welche an einem am Ende des Rohres (6) angeordneten Ring (16) befestigt ist, wobei das Rohr (6) von einem glockenartigen, zylindrischen Körper (17), der koaxial zu diesem angeordnet ist, umgeben ist, **dadurch gekennzeichnet, dass** es durch eine zylindrische Umhüllung (11) gebildet wird, in deren Seitenfläche eine Vielzahl von Öffnungen (12) vorgesehen sind, wobei der obere Umfang (14) dichtend an der Kuppel der Verdampfungskammer (1) befestigt ist und wobei der untere Umfang mit einem kegelstumpfförmigen Körper (13) verbunden ist, dessen Unterseite wiederum mit einem zylindrischen Kragen (15) verbunden ist, welcher nicht-dichtend den Abschlussring (16) des Rohres (6) umgibt, woran die perforierte Platte (7) befestigt ist, welche das zu konzentrierende Produkt in die Verdampfungskammer (1) sprüht.

## Revendications

1. Un élément déflecteur pour les vapeurs qui sont libérées à l'intérieur d'une chambre d'évaporation (1) dans laquelle débouche un tuyau vertical (6) alimentant à partir de dessus le produit à concentrer, qui est arrosé par l'intermédiaire d'une plaque percée (7) qui est fixée sur un bourrelet (16) agencé à l'extrémité du tuyau (6) entourée par un corps à cloche (17), lui agencé de manière coaxiale, **caractérisé en ce qu'**il est composé d'une enceinte cylindrique (11) ayant face latérale équipée d'une pluralité des trous (12), la circonférence supérieure (14) fixée à étanche à la voûte de la chambre d'évaporation (1) et la circonférence inférieure reliée à un corps tronconique (13) dont la base la plus petite est reliée, à son tour, à un collier cylindrique (15) n'entourant pas à étanche le bourrelet terminal (16) du tuyau (6) qui est fixé sur la plaque percée (7), qui arrose le produit à concentrer à l'intérieur de la chambre d'évaporation (1).
